Europäisches Patentamt

European Patent Office

Office européen des brevets

(19)

(11) Numéro de publication: **0 078 748**
**A1**

(12) # DEMANDE DE BREVET EUROPEEN

(21) Numéro de dépôt: **82402016.8**

(22) Date de dépôt: **02.11.82**

(51) Int. Cl.³: **H 01 M 4/86**

(30) Priorité: **04.11.81 FR 8120781**

(43) Date de publication de la demande: **11.05.83**
**Bulletin 83/19**

(84) Etats contractants désignés: **AT BE CH DE GB IT LI NL SE**

(71) Demandeur: **INSTITUT FRANCAIS DU PETROLE, 4, Avenue de Bois-Préau, F-92502 Rueil-Malmaison (FR)**

(72) Inventeur: **Breelle, Yves, 12, allée du Tapis Vert Domaine du Grandchamp, F-78230 Le Pecq (FR)**
Inventeur: **Grehier, Alain, 26, rue Mousset Robert, F-75012 Paris (FR)**

(54) **Méthode de fabrication d'une électrode de pile à combustible à gaz.**

(57) Methode de fabrication d'une électrode de pile à combustible comportant un support mécanique (1) électriquement conducteur supportant une structure catalytique (2) recouverte d'un film d'un matériau hydrofuge (3).

Après avoir déposé la structure catalytique (2) sur le support (1) on dépose dar pulvérisation une poudre hydrofuge maintenue à une température au plus égale à 4°C, puis on presse l'ensemble ainsi obtenu en augmentant la pression d'au plus 20 bars par seconde jusqu'à une valeur maximale au plus égale à 400 bars. Cette pression maximale est maintenue pendant une durée déterminée.

Méthode applicable à la fabrication d'électrodes de pile à combustible à gaz.

- 1 -

## METHODE DE FABRICATION D'UNE ELECTRODE DE PILE A COMBUSTIBLE.

La présente invention concerne une méthode de fabrication d'une électrode de pile à combustible.

Une telle pile comprend généralement un bloc de pile dans lequel des électrodes délimitent des compartiments recevant un électrolyte, des compartiments alimentés en combustible et des compartiments alimentés en carburant.

Chaque électrode comporte :

- un support électriquement conducteur qui collecte le courant électrique produit par la réaction électro-chimique et assure la tenue mécanique de l'électrode,

- une structure catalytique en contact avec le support et dans laquelle se développe la réaction électro-chimique, et

- une couche hydrofuge recouvrant la structure catalytique empêchant le passage de l'électrolyte vers les compartiments contenant les gaz réactifs.

La couche hydrofuge est constituée par du polytétrafluoréthylène (P.T.F.E.) qui, selon l'art antérieur, est déposé par pulvérisation sur une feuille d'aluminium, puis porté à température suffisante pour réaliser un frittage. La couche hydrofuge ainsi formée est décollée de la feuille d'aluminium et transférée sur la couche catalytique sur laquelle elle est appliquée sous pression. Dans une autre disposition de l'art antérieur, l'ensemble feuille d'aluminium - couche P.T.F.E. est appliquée sous pression, après frittage, sur la couche catalytique. La feuille d'aluminium est ensuite retirée.

Cette méthode de fabrication s'avère longue et délicate, le retrait de la feuille d'aluminium risquant de détériorer la couche hydrofuge.

La présente invention propose une méthode ne présentant pas les inconvénients indiqués ci-dessus, qui permet de fabriquer une électrode de pile à combustible comportant un support électriquement conducteur sur lequel est déposée une couche catalytique recouverte d'un film hydrofuge dont la réalisation comporte une pulvérisation de polytétrafluoréthylène.

Cette méthode, comportant le pressage de l'ensemble constitué par ledit support, ladite couche catalytique et ledit film hydrofuge est caractérisée en ce que ledit film hydrofuge est formé par pulvérisation de polytétrafluoréthylène sur la couche catalytique en limitant la température de la poudre à une valeur au plus égale à 40°C, avant pressage dudit ensemble jusqu'à une pression maximale fixée à l'avance.

Plus précisément, la pression est augmentée progressivement à une vitesse qui, en général, ne dépasse pas 20 bars par seconde jusqu'à une valeur maximale au plus égale à 400 bars, puis maintenue à cette valeur pendant un intervalle de temps qui sera, par exemple, inférieur à 5 secondes.

Eventuellement, un matériau porophore ou prorogène (matériau susceptible d'être éliminé pour laisser subsister un ensemble de pores), tel que du carbonate ou de carbamate d'ammonium, est incorporé au matériau hydrofuge, dans le but d'obtenir une porosité déterminée.

Lorsqu'un matériau porophore est incorporé au matériau hydrofuge, un traitement thermique est appliqué pour décomposer ce matériau porophore après le pressage de la couche hydrofuge.

L'invention pourra être bien comprise et tous ses avantages apparaîtront clairement à la lecture de la description qui suit illustrée par les figures annexées dans lesquelles :
- la figure 1 montre schématiquement l'opération de dépôt de la poudre hydrofuge,
- la figure 2 illustre l'opération de fabrication de l'électrode, et

- la figure 3 représente une variante du mode de réalisation illustré par la figure 2.

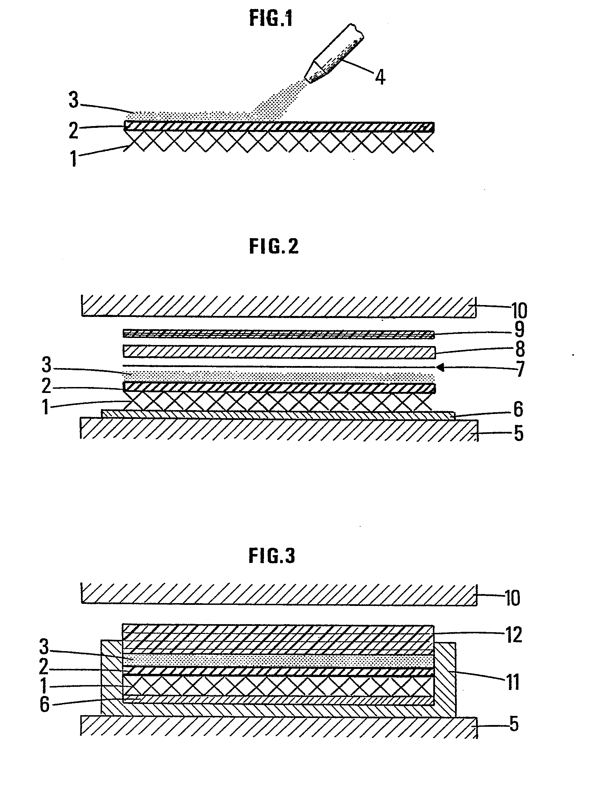

Sur un support 1 électriquement conducteur est déposée de façon connue en soi la structure catalytique 2 (Figure 1).

Le support 1 est, par exemple, constitué par un métal fritté, une feuille de métal déployé etc..., tandis que la structure catalytique, peut être constituée de charbon actif imprégné par le catalyseur approprié et mélangé à du P.T.F.E., qui après frittage assure la cohésion de cette structure catalytique.

On pulvérise alors sur la structure catalytique 2 une poudre de P.T.F.E. (tel que celui commercialisé sous le nom de TEFLON 702 N) pour former un film 3. Cette pulvérisation est réalisée de façon connue en soi, par exemple à l'aide d'un appareillage schématisé en 4, du type de celui décrit dans le brevet français 2.314.775 ou son premier certificat d'addition 2.380.822.

On a découvert que cette pulvérisation s'effectue dans de très bonnes conditions en maintenant la poudre de TEFLON à une température au plus égale à 4°C. Pour cela, l'opération est réalisée à la température ambiante après avoir refroidi la poudre de TEFLON à une température inférieure à 4°C, par exemple -5°C.

L'ensemble ainsi obtenu est alors soumis à un effort de compression à l'aide d'une presse (Figure 2).

Cette opération est effectuée dans les conditions indiquées ci-dessous.

L'électrode est déposé sur un plateau métallique présentant une face polie. Ce plateau peut être directement constitué par le plateau inférieur 5 d'une presse, ou par une plaque métallique 6, par exemple en acier inoxydable.

La couche TEFLON est recouverte d'une mince feuille de papier-pelure 7, puis recouverte d'une nouvelle plaque métallique 8, par exemple en acier inoxydable présentant également une face polie, celle-ci étant appliquée sur la couche de P.T.F.E. Une feuille d'élastomère toilée 9, par exemple de polyuréthane, commercialisée sous le nom d'ADIPRENE par DUPONT ET NEMOURS présentant une dureté d'environ 70 shore est interposée entre la plaque métallique 8 et le plateau supérieur de la presse 10.

Le rapprochement des plateaux de la presse est réalisé de façon que l'électrode soit soumise à une augmentation de pression dont la vitesse ne dépasse pas en général 20 bars/seconde jusqu'à ce que la pression atteigne une valeur maximale au plus égale à 400 bars.

L'électrode est alors maintenue à cette pression maximale pendant une durée qui sera en général supérieure à 5 secondes.

La pression sur l'électrode est ensuite diminuée et les plateaux 5 et 10 de la presse sont écartés très lentement à une vitesse n'excédant pas, par exemple 20 bars/seconde.

Selon une variante illustrée par la figure 3, l'électrode est placée dans un moule 11 de dimensions appropriées qui repose sur le plateau 5 de la presse. Une feuille d'élastomère toilée ou non 12, par exemple de polyuréthane, commercialisée sous le nom d'ADIPRENE, ayant une dureté d'au moins 70 shore est interposée entre l'électrode et le plateau supérieur 10 de la presse.

Les conditions de pressage de l'électrode sont identiques à celles indiquées plus haut.

Après cette opération, la fabrication de l'électrode est terminée et celle-ci est prête à être utilisée dans la fabrication d'un bloc de pile à combustible.

A titre d'exemple, la fabrication d'électrode a été réalisée en utilisant une presse dont les plateaux étaient rapprochés à une vitesse correspondant à un accroissement de pression de 6,5 bars/seconde pour obtenir une augmentation totale de pression d'environ 130 bars, la pression maximale de 130 bars étant maintenue pendant 10 secondes avant la séparation des plateaux de la presse effectuée à la vitesse de 10 bars par seconde.

Eventuellement, une poudre de matériau porophore, tel que du carbonate ou du carbamate d'ammonium, est mélangée à la poudre de matériau hydrofuge avant sa pulvérisation.

Après avoir effectué le pressage comme indiqué ci-dessus, l'électrode obtenue, est soumise à un traitement thermique pour éliminer ce matériau porophore.

Par exemple, ce traitement thermique consiste à élever la température du matériau porophore au-delà d'une valeur-seuil permettant son élimination en particulier par décomposition, vaporisation, etc...

Pour un mélange de poudre hydrofuge et contenant 60 % en poids de carbonate d'ammonium, cette valeur-seuil est d'au moins 50°C et de bons résultats ont été obtenus avec une valeur de 80°C, maintenue pendant environ 30 minutes.

R E V E N D I C A T I O N S
================================

1. - Méthode de fabrication d'une électrode de pile à combustible comportant un support électriquement conducteur sur lequel est déposée une couche catalytique recouverte d'un film hydrofuge dont la réalisation comporte une pulvérisation de polytétrafluoréthylène, cette méthode comportant le pressage de l'ensemble constitué par ledit support, ladite structure catalytique et ledit film hydrofuge, caractérisée en ce que ledit film hydrofuge est formé par pulvérisation de polytétrafluoréthylène sur la couche catalytique en limitant la température de la poudre à une valeur au plus égale à 4°C, avant pressage dudit ensemble jusqu'à une pression maximale fixée à l'avance.

2. - Méthode selon la revendication 1, caractérisée en ce que la valeur de pression maximale est au plus égale à 400 bars.

3. - Méthode selon la revendication 2, caractérisée en ce que la pression maximale est appliquée en augmentant progressivement la pression à une vitesse au plus égale à 20 bars/seconde.

4. - Méthode selon la revendication 2, caractérisée en ce qu'on maintient la pression maximale pendant une durée de temps déterminée puis on diminue lentement la pression.

5. - Méthode selon la revendication 4, caractérisée en ce que ladite durée de temps déterminée est au moins égale à 5 secondes.

6. - Méthode selon l'une quelconque des revendications précédentes dans laquelle la pression est exercée par rapprochement des plateaux d'une presse, caractérisée en ce que l'on interpose entre l'un des plateaux de la presse et ledit film hydrofuge au moins une plaque en élastomère toilé ayant une dureté d'environ 70 shore.

7. - Méthode selon la revendication 6, caractérisée en ce que l'on interpose entre la plaque d'élastomère toilé et ledit film hydrofuge une plaque métallique présentant une face polie et une feuille de papier-pelure placée entre la face polie de la plaque métallique et le film hydrofuge.

8. - Méthode selon l'une quelconque des revendications 6 ou 7, caractérisée en ce que, après avoir pressé l'électrode par rapprochement des plateaux de la presse, on écarte ces plateaux avec une vitesse au plus égale à 20 bars/seconde.

9. - Méthode selon l'une quelconque des revendications 6 à 8, caractérisée en ce que l'électrode est pressée en étant maintenue dans un moule.

10. - Méthode selon la revendication 1, dans laquelle un matériau porophore est mélangé au polytétrafluoréthylène, caractérisée en ce qu'après pressage on élève la température dudit ensemble jusqu'à au moins une valeur-seuil déterminée.

PL _unique

**FIG.1**

**FIG.2**

**FIG.3**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | H 01 M 4/86 |
| Y | DE-A-1 671 456 (MATSUSHITA ELECTRIC INDUSTRIAL CO. LTD.) *Exemple 6; revendications 1,18* | 1,3 | |
| | --- | | |
| Y | GB-A-1 273 717 (DURHAM CHEM. LTD.) *Page 1, lignes 10-13; revendications 1-6* | 1,3 | |
| | ----- | | |

DOMAINES TECHNIQUES RECHERCHES (Int. Cl. ³)

H 01 M

Le présent rapport de recherche a été établi pour toutes les revendications

| Lieu de la recherche | Date d'achèvement de la recherche | Examinateur |
|---|---|---|
| LA HAYE | 09-02-1983 | STANGE R.L.H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82